Europäisches Patentamt

European Patent Office

Office européen des brevets

(19)

(11) Publication number: **0 046 158**
A1

## (12) EUROPEAN PATENT APPLICATION

(21) Application number: **80302833.1**

(22) Date of filing: **18.08.80**

(51) Int. Cl.³: **G 01 J 1/50, A 61 N 5/06**

(43) Date of publication of application: **24.02.82**
Bulletin 82/8

(71) Applicant: **Williams, Gwyn Philip, 4 Harbor Hills Drive, Port Jefferson New York 11777 (US)**
Applicant: **Hennessy, John Peter Dickinson, 86 Holmfield Road, Leicester (GB)**

(72) Inventor: **Williams, Gwyn Philip, 4 Harbor Hills Drive, Port Jefferson New York 11777 (US)**
Inventor: **Hennessy, John Peter Dickinson, 86 Holmfield Road, Leicester (GB)**

(84) Designated Contracting States: **AT BE CH DE FR IT LI LU NL SE**

(74) Representative: **Spoor, Brian, c/O E. N. Lewis & Taylor 144 New Walk, Leicester, LE1 7JA (GB)**

(54) Ultraviolet dosimeter.

(57) An ultraviolet dosimeter which indicates dose accumulation by a multicoloured change of a sensitised element. The indicated doses are observed in sunlight and compared directly with standard colours known to produce given dose accumulations.

EP 0 046 158 A1

Title: Ultraviolet Dosimeter

The present invention relates to a device for monitoring radiation accumulation and in particular to an ultraviolet dosimeter for monitoring integrated ultraviolet radiation dose accumulation.

Prior art devices include those which merely indicate the ultraviolet dose by changing shade of the same colour. As a result, it is difficult to determine accurately the actual dose received. These devices are of limited dynamic range and to be useful for protection against sunburn, they require filters to extend their range, making them cumbersome and costly devices to use. Sometimes the devices involve liquids which have to be contained, making their use even more complicated.

Examples of these devices are illustrated in British Patents Nos. 1,507,486 and 1,422,631.

The exposure of human tissue to ultraviolet radiation causes the release of free radicals in the dermis and epidermis which has two principal effects:

(a) Erythema, which is a burning or reddening of the affected area, and

(b) Melanogenesis which is a tanning or browning.

Erythema is used medically to treat patients having skin disorders, for example, whereas melanogenesis is the tanning familiar to sun bathers.

In practice, difficulties arise in judging the period of time and the amount of ultraviolet radiation to which human tissue is exposed. For example, achievement of suntan by sunbathing is at present largely a matter of individual guesswork based on experience but reception of excessive ultraviolet radiation can be extremely painful as well as causing peeling and unsightly reddening of the skin.

It is an object of this invention to provide a device which will provide an indication when a desired level of radiation has been reached.

In accordance with the present invention there is provided an ultraviolet dosimeter comprising an element coated with an ultraviolet sensitive film (102, 201, 302) which changes through a plurality of distinct colours, the colour being produced being dependant on the duration of the exposure to ultraviolet radiation in the wavelength range (290-400 mm) which is known to cause erythema and melanogenesis, and a set of comparison colours (103, 109, 203, 303) adjacent to the sensitised element to place the sensitised element in a position where it may be readily compared with the comparison

3

colours to measure the dose of ultraviolet radiation accurately.

The sensitised element may comprise a paper coated with PVC latex and a plurality acid sensitive dyes. The latex coating becomes acidic in proportion to the amount of ultraviolet radiation which it receives and the released acid activiates colour changes in the dyes which provide a visual indication of the amount of radiation received.

The invention will now be described further by way of example with reference to the accompanying drawings in which:-

Figure 1 illustrates a first embodiment of the invention in which the sensitised element is contained within a protective case,

Figure 2 illustrates a second embodiment of the invention in which the sensitised element is contained behind a rotating disc which includes a window, Figure 2A being a plan view and Figure 2B being a sectional view on the lines $AA^1$ of Figure 2A,

Figure 3 illustrates a third embodiment of the invention in which sensitised dots are placed upon comparison colour standards.

4

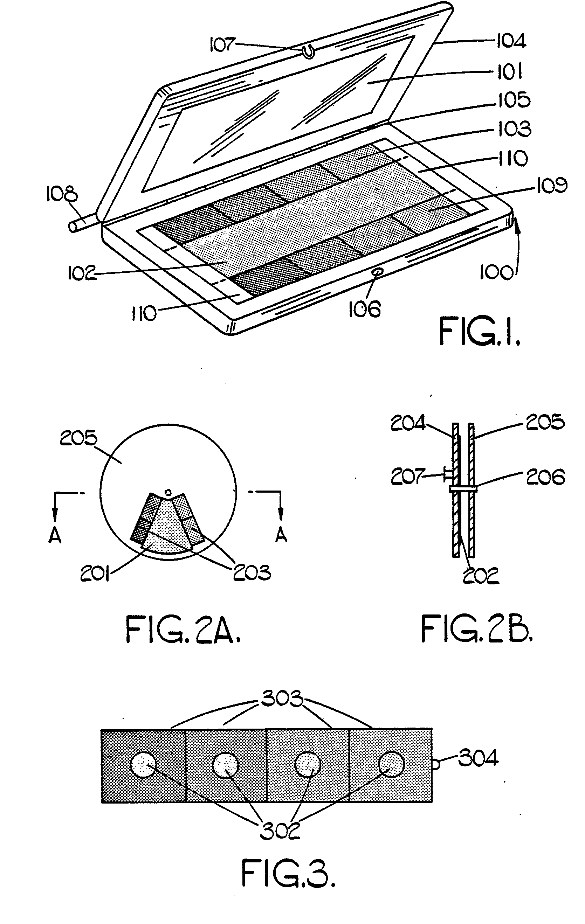

Referring to the construction shown in Figure 1 this comprises a case 100 having a lid 104 connected thereto by a hinge 105. Both case and lid are formed from a plastics material and carry respective elements 106 and 107 of a fastener, whereby the lid can be clipped to the case to hold it in its closed position.

Connected to the hinged side of the case is a safety pin 108 whereby the device can be attached to an article of clothing.

The case defines an internal shallow cavity in which are mounted three strips 102, 103, 109. These are laid parallel to one another within the cavity of the case and are held in place by detachable strips 110 at the ends.

The strips 103, 109 are divided into a number of zones of approximately equal size. In the example shown, four such zones are provided on each of the strips 103, 109. The zones are coloured. Moreover the colour change from one zone and the next as indicated by hatching in the drawing.

The strip 102 which lies between the strips 103, 109 is covered with a sensitised layer which is preferably acid sensitive dyes in contact with a halogen containing material. The sensitised layer is however of a kind

5

which changes through a range of different colours very slowly under exposure to light rays. The lid 104 has a rectangular opening which may contain a transparent window 101. The window is constructed from a material providing filtration for light rays falling upon it. It allows through light rays in the ultraviolet band at least over the wavelengths known to produce erythema or melanogenesis dependent upon the use to which the device is to be put. Erythema occurs in the region 290 to 320 nanometers wavelengths and melanogenesis in the region 320 to 400 nanometers wavelengths.

In use when the device is to be used for melanogenesis it may be attached to an article of clothing so that solar radiation falling upon the users' skin will also fall upon the device and pass through the window 101 onto the sensitised surface of the strip 102.

Simultaneously, with exposure of the users skin to the sun rays, the sensitised layer 102 will change colour. The user can check the extent of expected tanning by comparing the colour of the strip 102 with the colours of the zones of the strips 103, 109 lying at opposite sides of it respectively. When the required degree of colouration of the strip 102 has been reached this will indicate that sufficient radiation has been received to provide the required tanning effect on the skin.

6

The strips 103, 109 may be of appropriate colours to provide precalculated tanning for fair skinned or dark skinned people. An example of the sensitised element is polyvinylchloride latex mixed with acid sensitive dyes, such as methylene blue and methyl yellow, which are deposited on a paper substrate and allowed to dry to form a film on the paper.

When the above mentioned dyes are both used, the film is initially green. Upon exposure to ultraviolet radiation, chlorine is released and bonds with hydrogen to make the film progressively acidic on increasing exposure. In response to this the acid sensing dyes change colour in following order: olive green, brown, purple and red.

On the first day a brown colouration would indicate a safe tanning exposure for an average person, while purple or red would indicate the possibility of a resulting burning. Note that the colours that the colours are indicative of the expected effect on the skin to aid the user in avoiding errors in using the device.

The spectral response of the above described chemical combination used to form the film in the range 290 to 400 nm closely resembles that of human skin, thus the invention provides an accurate means of measuring the portion of the solar spectrum important for skin protection.

Where artificial sources of ultraviolet radiation are used, filters may be required because of their extended spectral range. An aritifical source of ultraviolet raidation is typically a lamp, known per se.

An advantage of the present invention over prior art devices is the wide dynamic range, which is from 0.1 to 10,000 millijoules per centimetre squared at 3000 $\overset{\text{o}}{\text{A}}$. Prior art devices have only been able to achieve this range with filters.

The present invention may be produced quickly and at low cost by printing. The sensing material is printed on a paper or other suitable substrate and then the comparison colours are printed about the sensitised areas to produce a device such as that shown in Figure 3.

It is understood that all equivalent methods of fabricating this device are included within the present invention. Such equivalent methods include separate printing of the sensitised areas and comparison colours which are combined in a later operation as for example by dicing the sensitised paper into small portions which are then applied with an adhesive to the substrate containing the comparison colours. For the sake of brevity, rolling, printing or other equivalent application techniques are referred to herein generally as printing.

8

Referring to Figure 1, the strip 102 must be renewed before each period in the sun.

Figure 2 shows a top view in Figure 2A and a side view in Figure 2B of the invention embodied as two parallel discs 204, 205 being capable of rotating with respect to each other about a central pivot 206. The sensitised paper 202 is mounted on the inner surface of disc 204 such that it may be exposed through the window 201 in disc 205. Adjacent to the window are comparison colours 203, used to judge the amount of ultraviolet exposure. For each period of exposure to ultraviolet radiation, disc 206 may be rotated to uncover a previously unexposed piece of sensitised paper 202 on disc 204. In this way, the device may be used for several such exposures before all the sensitised paper 202 has been exposed. The device may be removeably attached to clothing by a clip or adhesive fastening 207.

Figure 3 shows the device embodied as a single strip divided into zones of different colours, 303. Within each zone lies a region of the sensitised paper 302. In this way, it is easy in sunlight to judge when a sensitised element 302 matches a particular colour zone 303. A new strip is required for each exposure to ultraviolet radiation and the whole device therefore embodies several such strips in an envelope, one being removed

9

at a time.  The strips may be **removably** attached to clothing using a clip or pressure sensitive adhesive 304.

10

CLAIMS:

1. An ultraviolet dosimeter comprising an element coated with an ultraviolet sensitive film (102, 201, 302) which changes through a plurality of distinct colours, the colour being produced being dependant on the duration of the exposure to ultraviolet radiation in the wavelength range (290-400 nm) which is known to cause erythema and melanogenesis, and a set of comparison colours (103, 109, 203, 303) adjacent to the sensitised element to place the sensitised element in a position where it may be readily compared with the comparison colours to measure the dose of ultraviolet radiation accurately.

2. A device as claimed in claim 1, further comprising a plurality of sensitised elements, a protective cover and means for advancing unexposed element to position of exposure for successive use of the device.

3. A device as claimed in claim 1 or 2, in which the spectral response of the sensitised element closely matches that of human skin.

4. A device as claimed in any of claims 1 to 3 in which the sensitised element is capable (without a filter) of responding to a dynamic range from 0.1 to 10,000 millijoules per square centimetre at a 3000 $\overset{o}{A}$.

5. A device as claimed in any one of the preceeding claims, in which the sensitised element is exposed through an aperture (101, 201) which forms part of the device.

6. A device as claimed in claim 1, in which when the ultraviolet radiation originates from an artifical source the sensitised element is exposed through a filter to compensate for differences between artificial and natural forms of ultraviolet radiation.

7. A device as claimed in any one of the preceding claims in which the sensitised element comprises a plurality of acid sensitive dyes in contact with a halogen containing material in aqueous emulsion, said halogen being released and combined with hydrogen from the water contained in the emulsion to make the film acidic upon receiving ultraviolet radiation, said dyes changing through distinct multiple colours in response to the degree of acidity.

8. A device as claimed in claim 7, in which methylene blue and dimthyl yellow dyes are mixed to produce an initially green film which progresses through brown, purple and red upon continued exposure to ultraviolet radiation.

E.N. Lewis & Taylor
144 New Walk,
Leicester, LE1 7JA

0046158

1/1

FIG.I.

FIG.2A.

FIG.2B.

FIG.3.

European Patent
Office

**EUROPEAN SEARCH REPORT**

Application number

EP 80 30 20.1

| | **DOCUMENTS CONSIDERED TO BE RELEVANT** | | **CLASSIFICATION OF THE APPLICATION (Int. Cl.³)** |
|---|---|---|---|
| Category | Citation of document with indication, where appropriate, of relevant passages | Relevant to claim | |
| | US - A - 3 787 687 (T. TRUMBLE) <br> * columns 2,4,5; figures 1,2 * <br> --- | 1,6 | G 01 J 1/50 <br> A 61 N 5/06 |
| | US - A - 3 194 963 (W. McKEE) <br> * columns 2,3,7; figures 13-14 * <br> --- | 1,2,5 | |
| | GB - A - 920 689 (U.K.A.E.A.) <br> * pages 1-3 * <br> --- | 1,7 | |
| D | US - A - 3 903 423 (A. ZWEIG) <br> * columns 1,5-6; figures 1,5 * <br> --- | 1,2,6 | **TECHNICAL FIELDS SEARCHED (Int. Cl.³)** <br><br> G 01 J 1/50 <br> G 01 T 1/04 |
| | GB - A - 1 146 644 (MUANYAGIPARI KUTATO INTEZET) <br> * pages 1-2 * <br> ---------- | 1,7 | |
| | | | **CATEGORY OF CITED DOCUMENTS** <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |
| The present search report has been drawn up for all claims | | | |

| Place of search | Date of completion of the search | Examiner |
|---|---|---|
| The Hague | 05-10-1981 | BOEHM |

EPO Form 1503.1 06.78